# EUROPÄISCHE PATENTSCHRIFT

(11) **EP 3 597 577 B1**
(45) Veröffentlichungstag und Bekanntmachung des Hinweises auf die Patenterteilung: **26.04.2023**
(21) Anmeldenummer: 19168676.5
(22) Anmeldetag: 11.04.2019
(51) Int. Cl.: B65G 54/02, B65G 47/84, B65G 47/71

(54) **VORRICHTUNG UND VERFAHREN ZUM PUFFERN VON STÜCKGÜTERN**
DEVICE AND METHOD FOR BUFFERING ARTICLES
DISPOSITIF ET PROCÉDÉ PERMETTANT DE TAMPONNER DES ARTICLES

(30) Priorität: 17.07.2018 DE 102018211859
(43) Veröffentlichungstag der Anmeldung: 22.01.2020
(73) Patentinhaber: KRONES AG, 93073 Neutraubling (DE)
(72) Erfinder: SEGER, Martin, 93073 Neutraubling (DE); WAHL, Matthias, 93073 Neutraubling (DE); JOGSCH, Michael, 93073 Neutraubling (DE)
(74) Vertreter: Grünecker Patent- und Rechtsanwälte PartG mbB

(56) Entgegenhaltungen:
- EP-A1- 2 500 296
- EP-A1- 3 461 764
- WO-A1-2016/102117
- WO-A1-2016/200748
- WO-A1-2018/184931
- DE-A1-102008 040 204
- DE-A1-102011 075 178

## Beschreibung

Die Erfindung betrifft eine Puffervorrichtung und ein Verfahren zum Puffern von Stückgütern, insbesondere Behälter, Flaschen oder Gebinde gemäß dem Oberbegriff der Ansprüche 1 und 7.

Im Bereich der Getränketechnologie, insbesondere im Bereich Block- und Transporttechnik, sind bereits Puffer bekannt, die eine Anzahl von Stückgütern, die einer nachfolgenden Maschine erst später zugeleitet werden sollen, aufhält und abpuffert.

DE 10 2011 075 178 A1 offenbart ein elektromagnetisches Transfersystem, wobei ein Transportelement an einem Förderelement zum in Wirkverbindung bringen und zum außer Wirkverbindung bringen mit wenigstens einem Gegenstand beweglich angeordnet ist, wobei die Bewegung des Transportelements durch wenigstens ein an der Trägerbahn ortsfest angeordnetes Betätigungselement erfolgt. Insbesondere offenbart DE 10 2011 075 178 A1 eine Puffervorrichtung für Stückgüter nach dem Oberbegriff des Anspruchs 1.

Aus der EP 2 920 093 B1 ist bereits eine entsprechende Puffervorrichtung gemäß den Oberbegriffen der Ansprüche 1 und 7 bekannt.

Bei der bekannten Puffervorrichtung werden die Artikel über Robotermanipulatoren auf die Pufferfläche gebracht.

Die Verwendung von Robotermanipulatoren ist kostspielig, außerdem bringt das bekannte System Nachteile beim Austakten einer bestimmten Anzahl von Reihen bzw. Zeilen mit sich, die auf die Gassenzahl eines nachfolgenden Packers abgestimmt werden muss. So kann ein Wechseln bzw. Ausbauen von Leitblechen notwendig werden.

Hiervon ausgehend liegt der vorliegenden Erfindung die Aufgabe zugrunde, eine Puffervorrichtung sowie ein entsprechendes Verfahren bereitzustellen, die ermöglichen, dass mit bedarfsorientierter Anzahl von Pufferreihen bzw. -zeilen aus der Pufferfläche gefahren werden kann, wobei die Vorrichtung gleichzeitig einfach und kostengünstig realisiert werden kann.

Erfindungsgemäß wird diese Aufgabe durch die Merkmale der Ansprüche 1 und 7 gelöst.

Die erfindungsgemäße Puffervorrichtung für Stückgüter, insbesondere Behälter, Flaschen oder Gebinde, umfasst eine Pufferfläche, eine Zufördereinrichtung, z. B. ein Zuförderband, zum Zufördern von Stückgütern zu der Pufferfläche, die sich bis in einen Einlaufbereich, der an ein hinteres Ende der Pufferfläche angrenzt, erstreckt, sowie eine Abfördereinrichtung, z. B. ein Abförderband, zum Abfördern der Stückgüter von der Pufferfläche. Erfindungsgemäß umfasst die Puffervorrichtung weiter mehrere umlaufende, unabhängig voneinander antreibbare Reihenschieber die die Stückgüter auf und über die Pufferfläche schieben können, wobei eine Umlaufbahn der Reihenschieber oberhalb der Pufferfläche angeordnet ist. Durch die jeweils unabhängig voneinander antreibbaren Reihenschieber können die Stückgüter der Pufferfläche zeilenweise zugeführt werden und es kann mit einer bedarfsorientierten Anzahl von Pufferzeilen aus der Pufferfläche gefahren werden. Das heißt, dass beispielsweise ein Artikelstrang zu der Pufferfläche transportiert werden kann, jedoch z. B. hinter der Pufferfläche zwei Stränge abgeführt werden können, um die Stückgüter zwei Maschinen zuzuführen wobei z.B. zwei Zeilen an Stückgütern durch jeweilige Reihenschieber auf die Abfördereinrichtung geschoben werden können derart, dass sie parallel zueinander auf der Abfördereinrichtung liegen. Anschließend können die Zeilen dann wieder getrennt werden und in zwei Produktsträngen jeweiligen Maschinen zugeführt werden.

Die Zufördereinrichtung und die Abfördereinrichtung erstrecken sich in einer Richtung senkrecht zur Transportrichtung, und die Puffervorrichtung umfasst vor dem Einlaufbereich der Zufördereinrichtung auf die Pufferfläche eine Weiche, die derart ausgebildet ist, dass der von der Zufördereinrichtung zugeführte Stückgüterstrang derart ablenkt wird, dass eine bestimmte Anzahl aufeinanderfolgender Stückgüter in eine Sägezahnform gebracht werden kann, wobei die Sägezahnform eine Spitze und zwei unter flachem Winkel zulaufende Abschnitte aufweist.

Dadurch, dass die Reihenschieber unabhängig voneinander antreibbar sind, können beispielsweise Freiräume auf der Pufferfläche einfach überfahren werden. Wenn der Freiraum komplett überfahren wurde, kann beispielsweise dann die Bewegung des jeweiligen Reihenschiebers wieder verlangsamt werden und schließlich an die Auslaufsituation angepasst werden. Durch die unabhängig voneinander antreibbaren und frei programmierbaren Antriebe der Reihenschieber, sind sämtliche Abstände zwischen den Reihenschiebern softwaretechnisch einstellbar, sodass beispielsweise bei einem Sortenwechsel kein Umbauen nötig ist. Darüber hinaus kann auf aktuelle Zustände reagiert werden und eine bedarfsorientierte Anzahl aus der Pufferfläche ausgeschoben werden. Wenn zwischen jeder Zeile an Stückgütern bzw. Stückgüterpulk ein Reihenschieber angeordnet ist, kann die Menge an von der Pufferfläche ausgeschobenen Stückgütern besonders gut und einfach gesteuert werden. Zusätzlich sind die Abstände der Reihen zueinander einstellbar was eine platzoptimierte Ansteuerung möglich macht.

Es ist besonders vorteilhaft, wenn die Reihenschieber von mehreren unabhängigen Antrieben antreibbar sind, sodass die Geschwindigkeit der Reihenschieber individuell angepasst werden kann. Dazu kann beispielsweise ein Längsstatorantrieb vorgesehen sein, oder aber die Reihenschieber können über kuppelbare Transportketten angetrieben werden. Es ist auch möglich, dass jeder Reihenschieber einen gesonderten elektrischen Antriebsmotor aufweist.

Die Pufferfläche kann als statischer Puffertisch oder aber als sich in Transportrichtung T bewegendes Förderband ausgebildet sein.

Gemäß der vorliegenden Erfindung ist es vorteilhafterweise möglich, dass in einer Transportrichtung von dem der Zufördereinrichtung zugewandten Ende der Pufferfläche zu einem der Abfördereinrichtung zugewandten Ende der Pufferfläche mehrere Reihenschieber hintereinander die Stückgüter schieben, insbesondere weist die Puffervorrichtung mehr als 10, vorteilhaft mehr als 15 und besonders vorteilhaft mehr als 30 umlaufende Reihenschieber auf.

Da die Umlaufbahn der Schieber oberhalb der Pufferfläche angeordnet ist, kann sich der entsprechende Reihenschieber in Transportrichtung quer zur Zufördereinrichtung über die Pufferfläche bewegen und sich dann am Ende der Pufferfläche sowie Abfördereinrichtung wieder zu einem Einlaufbereich zurückbewegen.

Gemäß einem bevorzugten Ausführungsbeispiel weist ein Reihenschieber eine Breite b auf, die im Wesentlichen der Breite der Pufferfläche entspricht, wobei hier im Wesentlichen die gleiche Breite bedeutet, dass die Breite des Reihenschiebers höchstens um 1 bis 5 % der Breite der Pufferfläche oder 2 mal der halbe Artikeldurchmesser abweicht - d.h. kleiner ist. Somit kann sichergestellt werden, dass alle Stückgüter sicher vom Schieber erfasst werden, und gegebenenfalls noch von einer Seitenführung an der Pufferfläche geführt werden.

Gemäß einem bevorzugten Ausführungsbeispiel umfasst ein Reihenschieber mehrere in einer Richtung quer zur Transportrichtung T angeordnete Schiebermodule, die also dann nur eine Breite aufweisen, die einer Teilbreite der Breite der Pufferfläche entspricht. Vorzugsweise sind auch diese Schiebermodule unabhängig voneinander antreibbar, was eine noch größere Variationsmöglichkeit beim Ausschieben mit sich bringt und ein noch gezielteres Abführen der Stückgüter von der Pufferfläche ermöglicht, da nicht stets eine ganze Zeile ausgeschoben werden muss, sondern gezielt nur eine bestimmte Anzahl an Stückgütern abgeführt werden kann.

Die Puffervorrichtung umfasst vor dem Einlaufbereich auf die Pufferfläche (wobei der Einlaufbereich der Zufördereinrichtung an das Ende der Pufferfläche angrenzt) die Weiche, , die den von der Zufördereinrichtung zugeführten Stückgüterstrang derart ablenkt, dass eine bestimmte Anzahl aufeinanderfolgender Stückgüter eine Sägezahnform aufweist. Dabei kann der zugeführte Artikelstrang aus einer Artikelreihe gebildet sein oder aber aus mehreren parallelen Reihen. Wird auf die Spitze des einlaufenden sägezahnförmigen Pulks dann ein synchronisierter Reihenschieber gesteuert, welcher dem Sägezahn dann weiterfolgt in Richtung Pufferfläche, wird erreicht, dass der Reihenschieber ohne den Stückgüterstrom unterbrechen zu müssen, der aus der Weiche kommt, zwischen die einzelnen sägezahnförmigen Zeilen bzw. Pulks eingefahren werden kann.

Gemäß einer bevorzugten Ausführungsform umfasst die Abfördereinrichtung mindestens zwei Abförderbänder wobei mindestens eine Zeile an Stückgüter von der Pufferfläche auf ein erstes Abförderband geschoben werden kann und bei mehreren auf dem ersten Abförderband nebeneinander liegenden Zeilen der Artikelstrom über eine Verteileinrichtung auf die mindestens zwei Abförderbänder in zwei Stränge aufgeteilt werden kann, oder
die Abfördereinrichtung zwei nebeneinanderliegende Abförderbänder umfasst und die Zeile an Stückgütern auf das eine oder andere Abförderband von dem Reihenschieber oder einem Reihenschiebermodul geschoben werden kann.

Es ist auch möglich, dass die Artikelströme nach der Pufferfläche weiter in Transportrichtung T gefördert werden und vorzugsweise dabei insbesondere geführt um 90° gedreht werden.

Bei dem erfindungsgemäßen Verfahren zum Puffern von Stückgütern, insbesondere Behältern, Flaschen oder Gebinde, werden die Stückgüter über eine Zufördereinrichtung zu einer Pufferfläche gefördert, und von unabhängig voneinander antreibbaren Reihenschiebern in Transportrichtung durch die Pufferfläche und zu einer Abfördereinrichtung geschoben. Die Reihenschieber laufen auf der Umlaufbahn oberhalb der Pufferfläche um. Vor dem Einlauf auf die Pufferfläche werden eine bestimmte Anzahl an Stückgütern in eine Sägezahnform gebracht, wobei die Sägezahnform eine Spitze und zwei unter flachem Winkel zulaufende Abschnitte aufweist. Beim Einlaufen der Stückgüter in den Einlaufbereich der Zuführeinrichtung, die an die Pufferfläche angrenzt, bewegt sich ein Reihenschieber in der Transportrichtung und greift zunächst an den vorauseilenden Abschnitt der sägezahnförmigen Stückgüter, der sich im Wesentlichen parallel zur Vorderfläche des Reihenschiebers erstreckt, an und schiebt in die Transportrichtung und bewegt sich weiter in die Transportrichtung, während sich die Stückgüter des nacheilenden Abschnitts, der sich unter einem spitzen Winkel zur Vorderfläche des Reihenschiebers erstreckt, nach und nach vor den Reihenschieber bewegen, bis die Artikel vor dem Reihenschieber liegen und auf die Pufferfläche geschoben werden.

Somit können die Stückgüter durch die Reihenschieber auf die Pufferfläche geschoben werden und auch von der Pufferfläche auf die Abfördereinrichtung geschoben werden. Wenn sich die Pufferfläche selbst nicht bewegt, können die Reihenschieber die Stückgüter auf der Pufferfläche in Richtung Abfördereinrichtung schieben. Ist die Pufferfläche als in Transportrichtung bewegliches Förderband ausgebildet, kann sich der Reihenschieber mit gleicher Geschwindigkeit bewegen, und somit die Stückgüter abstützen. Bewegt sich der Reihenschieber schneller als das Förderband, so kann der Reihenschieber die Stückgüter aufgrund der Relativgeschwindigkeit auf der Pufferfläche in Transportrichtung verschieben.

Vorteilhafterweise kann der Reihenschieber eine bestimmte Anzahl an Stückgütern zeilenweise auf die Pufferfläche einschieben.

Vorteilhafterweise können die Reihenschieber zumindest zeitweise mit unterschiedlichen Geschwindigkeiten angetrieben werden, sodass sich auch der Abstand zwischen zwei aufeinanderfolgenden Reihenschiebern ändert. Somit können die Stückgüter gezielt gepuffert und bedarfsgerecht ausgeschoben werden. Somit können auch auf einfache Art und Weise Freiräume in der Mitte der Pufferfläche überfahren werden. Vorzugsweise variiert die Geschwindigkeit eines Reihenschiebers bei Umlauf um eine Umlaufbahn, so dass die Geschwindigkeit an unterschiedliche Bedingungen beim Einlaufen, Transport über die Pufferfläche, Ausschieben sowie schnellem Rückweg in die Ausgangsposition gezielt angepasst werden kann ohne dabei jedoch die anderen Reihenschieber zu beeinflussen.

Die Sägezahnform weist eine Spitze und zwei unter flachem Winkel α zulaufende Abschnitte auf. Der Winkel α liegt dabei beispielsweise in einem Bereich von 1,5° bis 10°. Beim Einlaufen der Stückgüter in den Einlaufbereich, d. h., einem Bereich der Fördereinrichtung vor der Pufferfläche, bewegt sich ein in Transportrichtung einlaufender Reihenschieber und greift zunächst an dem vorauseilenden Abschnitt der sägezahnförmigen Artikel an, der im Wesentlichen parallel zur Vorderfläche des Reihenschiebers verläuft. Der Reihenschieber führt diesen Abschnitt in Transportrichtung mit, während die Stückgüter des nacheilenden Abschnitts, der sich unter einem spitzen Winkel zur Vorderfläche des Reihenschiebers erstreckt, sich nach und nach vor den Reihenschieber bewegen, bis die Artikel einer Zeile vor dem Reihenschieber liegen, und der Reihenschieber den Abschnitt auf die Pufferfläche schiebt.

Somit können die Stückgüter und die Reihenschieber einlaufen, ohne dass ein Reihenschieber oder die Zulaufeinrichtung gestoppt werden müssen. Dies ermöglicht eine kontinuierliche Betriebsweise.

Vorzugsweise werden die Reihenschieber beidseitig, d. h. links und rechts von der Pufferfläche geführt.

Es ist möglich, dass die Stückgüter in einem Stückgüterstrang zugeleitet werden, der ein oder mehrreihig sein kann und nach dem Puffertisch eine Verteilereinrichtung vorgesehen ist, die die Stückgüter in zwei oder mehr Strängen zum Abfördern zu zwei oder mehr Maschinen teilt.

Es ist möglich, dass in Transportrichtung mehrere, vorzugsweise zwei parallel angeordnete Zeilen von mehreren Reihenschiebern, vorzugsweise zwei, auf die Abfördereinrichtung geschoben werden und anschließend über eine Verteilereinrichtung in mehrere, vorzugsweise zwei Stückgüterstränge geteilt werden oder
nur eine Zeile von einem Reihenschieber auf die Abfördereinrichtung geschoben wird und ein Stückgüterstrang abgeleitet wird.

Das Verfahren kann somit gezielt an bestimmte Anforderungen angepasst werden.

Die vorliegende Erfindung wird nachfolgend unter Bezugnahme der folgenden Figuren näher erläutert.
- Fig. 1: zeigt grobschematisch eine Draufsicht auf ein Ausführungsbeispiel einer Puffervorrichtung gemäß der vorliegenden Erfindung.
- Fig. 2: zeigt grobschematisch eine Seitenansicht einer Puffervorrichtung gemäß einem Ausführungsbeispiel der vorliegenden Erfindung.
- Fig. 3: zeigt schematisch eine Aufsicht auf die Zuführeinrichtung mit einer vorgeschalteten Weiche sowie die Auslenkung der Stückgüter durch die Weiche in Abhängigkeit der Zeit.
- Fig. 4: zeigt grob schematisch ein Weg-Zeit-Diagramm, das die Bewegung des Behälterstroms und des Reihenschiebers zu verschiedenen Zeitpunkten zeigt.
- Fig. 5: zeigt grob schematisch ein bevorzugtes Ausführungsbeispiel der Puffervorrichtung mit Verteileinrichtung.
- Fig. 6: zeigt grob schematisch eine Aufsicht auf ein weiteres Ausführungsbeispiel.
- Fig. 7: zeigt eine bevorzugte Ausführungsform eines Reihenschiebers mit mehreren Modulen.
- Fig. 8a,8b: zeigen einen eireihigen und mehrreihigen Stückgutstrang.

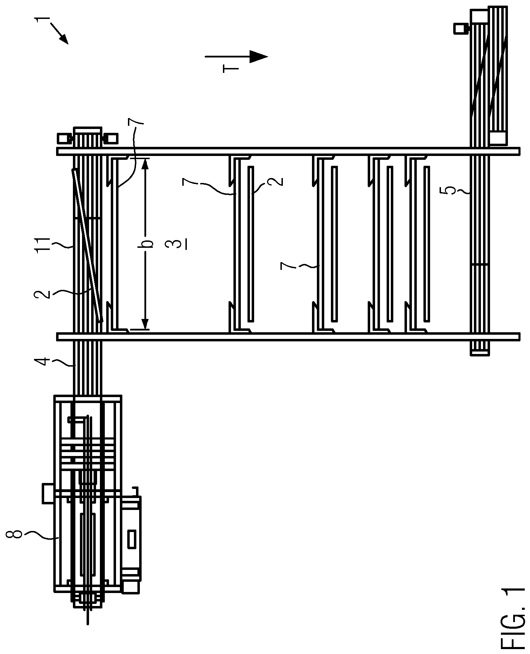

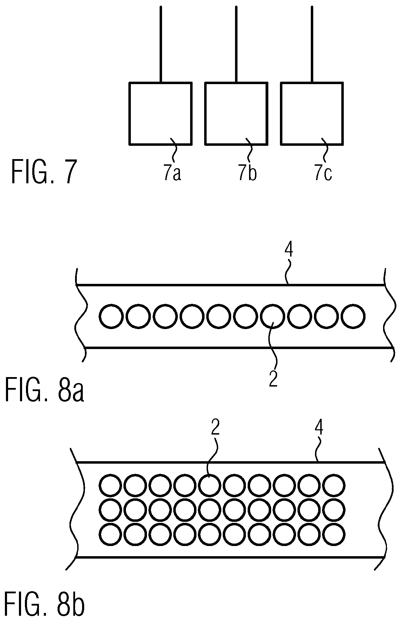

Fig. 1 zeigt eine Aufsicht auf ein Ausführungsbeispiel einer Puffervorrichtung gemäß der vorliegenden Erfindung. Die Vorrichtung umfasst eine Zufördereinrichtung 4 zum Zufördern von Stückgütern, wie beispielsweise Behälter, Flaschen oder Gebinde. Die Zufördereinrichtung ist vorzugsweise als umlaufendes Förderband ausgebildet. Die Zufördereinrichtung 4 erstreckt sich dabei bis in einen Einlaufbereich 11, der an das hintere Ende einer Pufferfläche 3 angrenzt. Am gegenüberliegenden Ende der Pufferfläche 3 ist die Abfördereinrichtung 5 angeordnet, die insbesondere auch als umlaufendes Förderband ausgebildet ist. Bei der Erfindung erstrecken sich sowohl die Zufördereinrichtung 4 als auch die Abfördereinrichtung 5 in einer Richtung senkrecht zur Transportrichtung T in der die Stückgüter durch die Pufferfläche 3 bewegt werden. Die Stückgüter werden auf der Zufördereinrichtung 4 in einem Stückgüterstrang antransportiert, der einreihig ausgebildet sein kann, wobei jedoch auch mehrere Stückgüter nebeneinander in einem Strang transportiert werden können, wie beispielsweise aus Fig. 8A und 8B hervorgeht.

Eine bestimmte Anzahl an Stückgütern im Einlaufbereich 11 kann von einem Reihenschieber 7 erfasst und als Zeile auf die Pufferfläche 3 geschoben werden.

Dazu weist die Puffervorrichtung 1 mehrere umlaufende, unabhängig voneinander antreibbare Reihenschieber 7 auf. Die Reihenschieber 7 weisen eine Breite b auf, die im Wesentlichen der Breite der Pufferfläche 3 entspricht, oder aber nur geringfügig, 1 % bis 5 % kleiner ist, um die Stückgüter zeilenweise vom Einlaufbereich 11 und über die Pufferfläche 3 zu schieben.

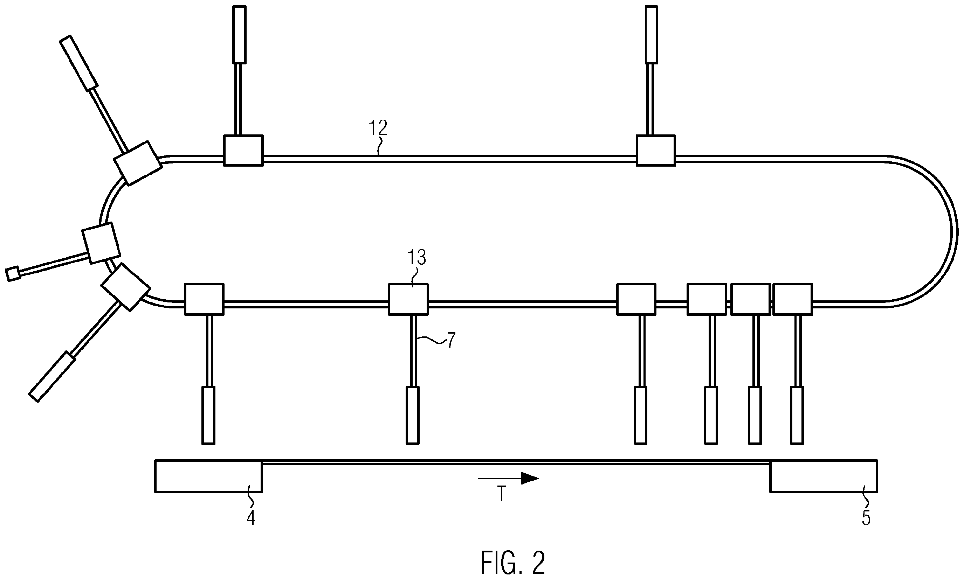

Vorteilhafterweise werden die Reihenschieber 7 von jeweiligen unabhängigen Antrieben 13 angetrieben, wie aus Fig. 2 hervorgeht.

Die Reihenschieber 7 können beispielsweise über einen sogenannten Längsstatorantrieb 13 oder kuppelbare Transportketten angetrieben werden, sodass verschiedene Reihenschieber 7 mit unterschiedlichen Geschwindigkeiten angetrieben werden können, derart, dass auch der Abstand benachbarter Reihenschieber variiert werden und die Geschwindigkeit individuell angepasst werden kann. Die Reihenschieber sind z.B. als Läufer von Linearmotoren, die auf der Umlaufbahn 12 angeordnet sind, ausgebildet und dazu in ihrem oberen Bereich mit Permanentmagneten versehen. Die Permanentmagneten und ein entsprechender Linearmotor stellen dann zusammen einen jeweiligen Antrieb für einen Reihenschieber dar.

Nicht nur die Verwendung eines Längsstatormotors bzw. auskuppelbare Ketten ist möglich, um die Reihenschieber 7 unabhängig voneinander anzutreiben. Es kann auch für jeden Reihenschieber 7 ein eigener Motor vorgesehen sein, der die Schieber 7 beispielsweise über ein Zahnrad und eine Zahnstange auf der geschlossenen Umlaufbahn 12 bewegt. Die Energieversorgung der Motoren kann dann über einen nicht extra dargestellten Schleifkontakt oder sogar induktiv erfolgen. Die Ansteuerung der Motoren erfolgt ebenfalls über Schleifkontakt oder über Funksignale etc.

Zusätzlich kann auch eine nicht dargestellte Einrichtung zur Positionserkennung (z.B. optisch) der Reihenschieber 7 vorgesehen sein, um die Bewegung der Reihenschieber (Geschwindigkeit und/oder Bewegungslänge) in Abhängigkeit Ihrer Position zu steuern und beispielsweise auch an die Bewegung der Zu- und Abfördereinrichtung 4, 5 und/oder Pufferbelegung anzupassen.

Dadurch, dass die Reihenschieber unabhängig voneinander antreibbar sind, können beispielsweise Freiräume auf der Pufferfläche einfach überfahren werden. Wenn der Freiraum beispielsweise komplett überfahren wurde, kann dann die Bewegung des jeweiligen Reihenschiebers wieder verlangsamt werden und schließlich an die Auslaufsituation angepasst werden.

Durch die unabhängig voneinander antreibbaren Reihenschieber und frei programmierbaren Antrieben der Reihenschieber 7 sind sämtliche Abstände zwischen den Reihenschiebern softwaretechnisch einstellbar, sodass beispielsweise bei einem Sortenwechsel kein Umbau nötig ist. Darüber hinaus kann auf aktuelle Zustände reagiert werden und eine bedarfsorientiere Anzahl an Stückgütern aus der Pufferfläche 3 ausgeschoben werden. Da zwischen jeder Zeile an Stückgütern bzw. Stückgüterpulk ein Reihenschieber 7 angeordnet ist, kann die Menge an ausgeschobenen Stückgütern besonders gut gesteuert werden und nach Bedarf angepasst werden. Vorzugsweise umfasst die Vorrichtung mehr als 15 besonders mehr als 30 Reihenschieber.

Wie aus Fig. 1 und 2 hervorgeht, befindet sich die Umlaufbahn 12 der Reihenschieber oberhalb der Pufferfläche 3, wobei die Reihenschieber beidseitig oberhalb der Pufferfläche 3 geführt werden, um für ausreichende Stabilität zu sorgen. Die Reihenschieber sind frei beweglich an der umlaufenden Führung der Umlaufbahn 12 angeordnet und können sich so entlang in Transportrichtung T über die Pufferfläche 3 bewegen, wie aus Fig. 2 hervorgeht. Am Ende der Pufferfläche 3 bewegen sich die Reihenschieber 7 dann nach oben weg und kehren zum Einlaufbereich 11 der Zufuhreinrichtung 4 zurück, um hier die Stückgüter wiederum zeilenweise zu übernehmen und auf die Pufferfläche und über die Pufferfläche 3 zu schieben.

Bei dieser Ausführungsform kann die Pufferfläche 3 als statische Pufferfläche ausgebildet sein. Grundsätzlich ist es aber auch möglich, dass die Pufferfläche 3 selbst ebenfalls als Förderband, das sich in Transportrichtung T bewegt und umlaufend angetrieben wird, ausgebildet ist. Wenn die Pufferfläche 3 als bewegliches Förderband ausgebildet ist, kann sich der Reihenschieber 7 mit gleicher Geschwindigkeit bewegen und somit die Stückgüter abstützen. Bewegt sich der Reihenschieber schneller als die Pufferfläche, so kann der Reihenschieber 7 die Stückgüter aufgrund der Relativgeschwindigkeit auf der Pufferfläche in Transportrichtung verschieben.

Gemäß einer bevorzugten Ausführungsform befindet sich vor dem Einlaufbereich 11 eine Weiche 8, die derart ausgebildet ist, dass der von der Zufördereinrichtung 4 zugeführte Stückgüterstrang derart abgelenkt wird, dass eine bestimmte Anzahl aufeinanderfolgender Stückgüter, die dann eine Zeile bilden, die überführt werden soll, in eine Sägezahnform gebracht werden können.

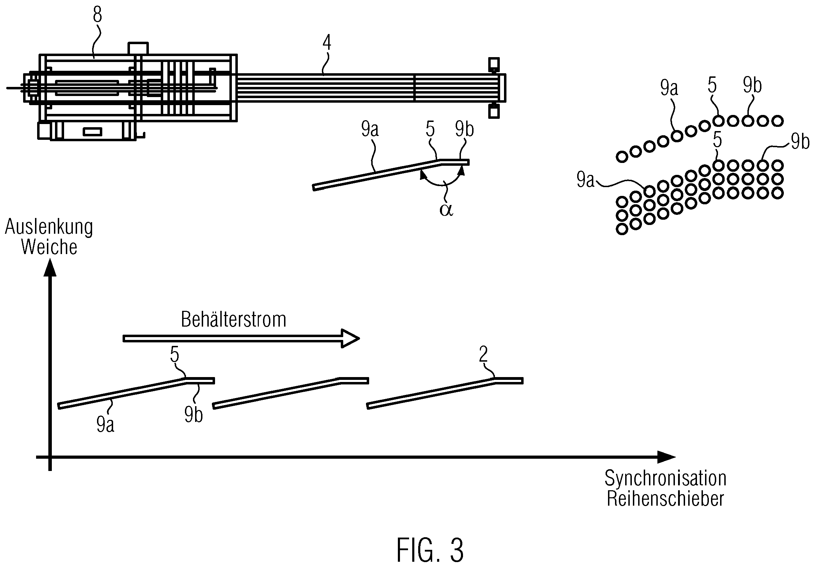

Fig. 3 macht Entsprechendes deutlich. Hinter der Weiche 8 weist der in Fig. 8A und 8B gezeigte Stückgüterstrom dann eine Sägezahnform auf, wie in Figur 3 gezeigt ist. Dabei können die Stückgüter entweder in einer Reihe einlaufen oder in mehreren übereinander angeordneten Reihen, sodass ein sägezahnringförmiger Pulk entsteht. Der sägezahnförmige Abschnitt weist dabei eine Spitze S auf, sowie zwei 9a, 9b unter flachem Winkel α zulaufende Abschnitte. Der Winkel α liegt beispielsweise in einem Bereich von 1,5° bis 10°. Der vorauseilende Abschnitt 9b ist vorzugsweise kleiner als der nacheilende Abschnitt 9a. Wie aus der Fig. 3 hervorgeht, werden durch die Weiche 8 sägezahnförmige Abschnitte erzeugt, die kontinuierlich hintereinander von der Zuführeinrichtung 4 in den Einlaufbereich 11 transportiert werden können.

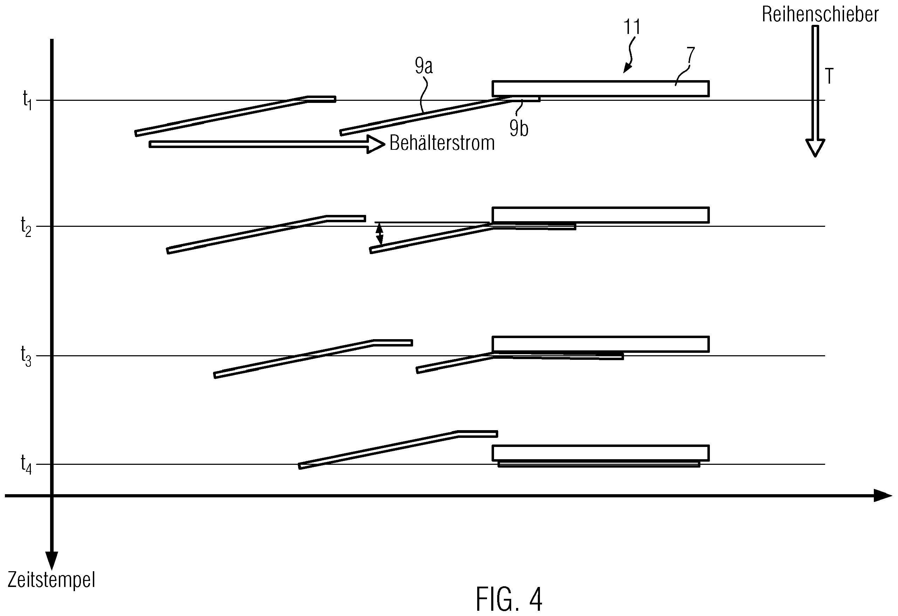

Fig. 4 zeigt ein Weg-Zeit-Diagramm, das die Bewegung der sägezahnförmigen Abschnitte zu verschiedenen Zeitpunkten quer zur Transportrichtung T in den Einlaufbereich 11 zeigt. Zu einem Zeitpunkt t1 wird ein sägezahnförmiger Abschnitt an Stückgütern auf der Zuführeinrichtung 4 in den Einlaufbereich 11 transportiert, und zwar soweit, dass der vorauseilende Abschnitt 9b von dem sich in Transportrichtung T bewegenden Reihenschieber 7 erfasst werden kann. Der Abschnitt 9b erstreckt sich dabei im Wesentlichen parallel zu der Vorderfläche des Reihenschiebers 7. Der Reihenschieber 7 bewegt sich weiter in Transportrichtung T, während gleichzeitig der sägezahnförmige Abschnitt weiter in eine Richtung senkrecht zur Transportrichtung gefördert wird und sich die Stückgüter des nacheilenden Abschnitts 9a der unter einem spitzen Winkel γ zur Vorderfläche des Reihenschiebers verläuft, vor den Reihenschieber 7 bewegen. Dadurch, dass der Abschnitt 9a sich unter einem Winkel zu der Vorderfläche erstreckt, kann der Reihenschieber 7 kontinuierlich weiterbewegt werden, bis sich alle Stückgüter eine Zeile zum Zeitpunkt t4 vor dem Reihenschieber 7 befinden, und nun als Zeile auf die Pufferfläche 3 geschoben werden können. Zu diesem Zeitpunkt bewegt sich bereits der nachfolgende sägezahnförmige Abschnitt in Richtung Einlaufbereich 11, sodass sich der Vorgang wiederholen kann.

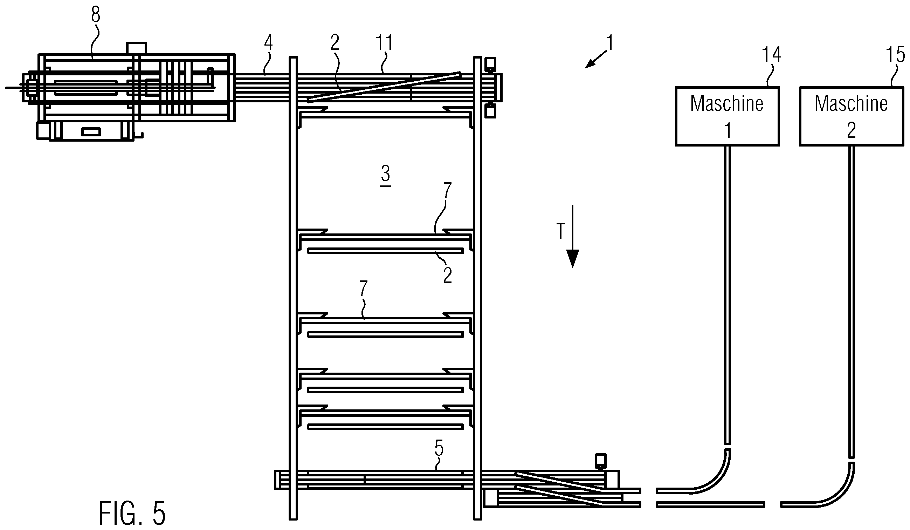

Fig. 5 zeigt die in Fig. 1 dargestellte Puffervorrichtung mit einer Verteilereinrichtung 10.Die Puffervorrichtung weist eine Zuführeinrichtung 4 auf, die die Stückgüter 2 in einem Strang zuleitet und in zwei Strängen ableitet und zu zwei Maschinen 14 und 15 führt. Dazu kann eine entsprechende Verteileinrichtung 10 vorgesehen sein, um die Spur zu trennen. Dazu können beispielsweise auf die Auslaufeinrichtung 5 zwei Zeilen an Stückgütern nebeneinander beispielsweise durch zwei Reihenschieber 7 geschoben werden, die anschließend getrennt werden. In Fig. 5 sind hier zwei Maschinen und zwei Abförderstränge gezeigt, jedoch können auch mehrere Abförderstränge erzeugt werden. Bei den Maschinen 14 und 15 kann es sich um Gebindepackmaschinen, Packmaschinen, etc. handeln. Wenn mehrere Zeilen auf die Auslaufeinrichtung geschoben werden, muss die Abfördereinrichtung gestoppt werden, bis alle Zeilen auf der Abfördereinrichtung platziert sind.

Es ist auch möglich, dass die Abfördereinrichtung 5 aus zwei parallelen Förderbändern gebildet wird, die nebeneinander am auslaufseitigen Ende der Pufferfläche angeordnet sind, sodass die Reihenschieber zunächst eine Zeile auf das letzte Abförderband schieben und eine weitere Zeile auf das der Pufferfläche 3 zugewandte Förderband, sodass die Stückgüter in zwei Strängen abgefördert werden können.

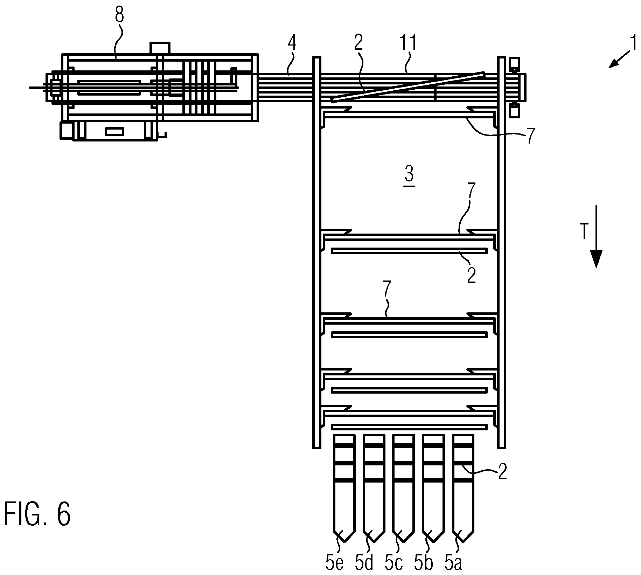

Fig. 6 zeigt eine weitere Ausführungsform der Abfördereinrichtung. Beispielsweise kann hier anstelle des Quertransports am auslaufseitigen Ende der Pufferfläche d. h. anstelle der senkrecht zur Transportrichtung T verlaufenden Abfördereinrichtung ein anschließender Längstransport in Transportrichtung T erfolgen. Dazu kann am Ende der Pufferfläche 3 ein Messerkantenüberschub erfolgen. Unter Messerkantenüberschub versteht man einen Übergang von einem Transportband zum nächsten Transportband mit sehr kleinen Umlenkrädern, damit wird das notwendige Totblech zur Überbrückung des Zwischenraums an der Transportoberfläche minimiert. Dabei können die Stückgüter um 90° gedreht werden, indem sie einmal einlaufseitig quergeschoben werden und am Abtransport diese Querausrichtung nicht mehr ändern.

Außerdem ist es hier auch möglich, anstatt des zuvor gezeigten durchgehenden Reihenschiebers 7 einen Reihenschieber zu verwenden, der mehrere modulare Segmente 7a, b, c, wie in Fig. 7 dargestellt ist, aufweist, die jeweils vorzugsweise ebenfalls unabhängig antreibbar sind und sich unabhängig mit unterschiedlicher Geschwindigkeit in Transportrichtung T bewegen können. Somit kann auch einzeln, oder eine bestimmte Anzahl an Stückgütern aus dem Zeilenverbund ausgeschoben werden. Zudem können Gebinde-Lagen oder Großbehälter für Displayverpackungen vorbereitet werden (. Es können die Stückgüter mit Lücken ausgetaktet werden, insbesondere bei Einsatz eines zwischengeschalteten Quertransports. Auch eine Umverpackung von Gebinden oder Paketen ist möglich.

Nachfolgend wird das erfindungsgemäße Verfahren unter Bezugnahme der Fig. 1 bis 5 näher erläutert. Zum Puffern von Stückgütern werden zunächst Stückgüter 2, wie Behälter oder Flaschen oder Gebinde, von einer Zufördereinrichtung 4 antransportiert. Die Stückgüter 2 werden in einer Richtung antransportiert, die sich im Wesentlichen senkrecht zur Richtung T erstreckt. Vor dem Einlaufbereich 11 werden, wie zuvor beschrieben, sägezahnförmige Abschnitte erzeugt, die hintereinander, wie aus Fig. 3 hervorgeht, in Richtung Einlaufbereich 11 der Zufördereinrichtung 4 transportiert werden. Während, wie in Zusammenhang mit Fig. 4 vorher näher erläutert wurde, sich der sägezahnförmige Abschnitt 9b in den Einlaufbereich 11 hineinbewegt wird, nähert sich ein umlaufender Reihenschieber 11 und erfasst diesen Abschnitt 9b, wobei sich die Stückgüter nach und nach vor den sich in Transportrichtung T bewegenden Reihenschieber 7 bewegen, bis zu einem Zeitpunkt t4 alle Stückgüter einer Zeile vor dem Reihenschieber 7 befinden, der dann die Zeile auf die Pufferfläche 3 schieben kann. Wie aus Fig. 4 hervorgeht, können nachfolgende Reihenschieber 7 die sägezahnförmigen Abschnitte zeilenweise auf die Pufferfläche schieben. Die Bewegung des Reihenschiebers 7 ist an die Einlaufgeschwindigkeit der Stückgüter im Einlaufbereich 11 abgestimmt. Die Reihenschieber 7 bewegen, z.B. schieben die Stückgüter über die Pufferfläche 3 oder stützen sie ab, wenn sich die Pufferfläche selbst in Transportrichtung bewegt.

Da die Reihenschieber 7 unabhängig voneinander angetrieben sind, können Freiräume in der Mitte der Pufferfläche 3 einfach überfahren werden. Wenn beispielsweise der Freiraum komplett überbrückt wurde, wird die Bewegung wieder verlangsamt und an die Auslaufsituation angepasst. Das bedeutet, dass unterschiedliche Reihenschieber unterschiedliche Geschwindigkeiten aufweisen können und auch die Geschwindigkeit eines Reihenschiebers 7 während eines Umlaufs auf der Umlaufbahn 12 variiert. Am Ende der Pufferfläche 3, dass der Abfördereinrichtung 5 zugewandt ist, kann dann eine bedarfsorientierte Anzahl von Zeilen aus dem Tisch auf das Abförderband gefahren werden, wobei beispielsweise von zwei aufeinanderfolgenden Reihenschiebern 7, wie aus Fig. 5 hervorgeht, zwei Zeilen auf die Abfördereinrichtung 5 geschoben werden, dann die Spur über eine Verteileinrichtung 10 getrennt wird und die Stückgüter unterschiedlichen Maschinen 14 und 15 zugeführt werden. Somit ist eine einfache Verteilung von einem Stückgüterstrang auf zwei Stückgüterstränge möglich. Bei Ausfall einer Maschine kann dann auch lediglich ein Stückgüterstrang ausgeschoben werden, um nur eine nachfolgende Maschine zu versorgen. Die andere Maschine kann somit stillgelegt werden und die überschüssigen Stückgüter können durch die Puffervorrichtung abgepuffert werden, d.h. zunächst auf der Pufferfläche verweilen. Beim Aufschieben der Zeilen muss darauf geachtet werden, dass die Abfördereinrichtung, d. h. hier das Auslaufband 5, bei Überschieben durch den Reihenschieber kurzzeitig gestoppt wird, oder man fährt ebenfalls in einem Sägezahnmuster aus dem Puffer 3. Um ein Sägezahnmuster am Auslaufband zu erzeugen wird der Reihenschieber 7 mit einem Stückgutstrang langsam über mehrere Auslaufbänder gefahren. Die Auslaufbänder können unterschiedliche Geschwindigkeiten haben und müssen nebeneinander angeordnet sein. Wenn der Reihenscheiber mit dem Stückgutstrang über das erste Auslaufband fährt werden die ersten Behälter vom Auslaufband abgezogen bzw. abgefördert. Dabei bewegt sich der Reihenschieber weiter und schiebt so den immer kleiner werdenden Stückgutstrang über die nebeneinander angeordneten Auslaufbänder. Diese Auslaufbänder fördern so die Behälter in einem Sägezahn Muster ab, welches dem Muster gleicht mit dem die Behälter von den Reihenschiebern aufgenommen wurden. Diese Variante ist zeichnerisch nicht dargestellt.

Die erfindungsgemäße Vorrichtung ermöglicht auch, dass ein Stückgüterstrang für eine Serviceausleitung ausgefahren werden kann.

Grundsätzlich ist es auch möglich, dass durch einen in Transportrichtung T nachgeordneten Transporteur eine 90°-Drehung der Stückgüter erfolgt. Bei einer Ausführung des Reihenschiebers mit Reihenschiebermodulen 7a, b, c, wie in Fig. 7 gezeigt ist, kann die Stückgutzeile wiederum gesplittet werden.

Die erfindungsgemäße Puffervorrichtung erlaubt, auf verschiedenste Anforderungen in einer Linie individuell zu reagieren. Darüber hinaus ergibt sich der Vorteil einer geringen Stellfläche und einfacher Bewegungsabläufe.

## Patentansprüche

1. Puffervorrichtung (1) für Stückgüter (2), insbesondere Behälter, Flaschen oder Gebinde, mit einer Pufferfläche (3),
einer Zufördereinrichtung (4), zum Zufördern von Stückgüter zu der Pufferfläche (3), die sich bis in einen Einlaufbereich (11), der an ein hinteres Ende der Pufferfläche (3) angrenzt, erstreckt,
einer am gegenüberliegenden Ende der Pufferfläche angeordneten Abfördereinrichtung (5), zum Abfördern von Stückgütern von der Pufferfläche (3) mehreren umlaufenden, unabhängig voneinander antreibbaren Reihenschiebern (7), die die Stückgüter (2) in Transportrichtung (T) durch die Pufferfläche (3) transportieren können, wobei eine Umlaufbahn (12) der Reihenschieber (7) oberhalb der Pufferfläche (3) angeordnet ist,
**dadurch gekennzeichnet, dass**
sich die Zufördereinrichtung (4) und die Abfördereinrichtung (5) in einer Richtung senkrecht zur Transportrichtung (T) erstrecken und
die Puffervorrichtung (1) vor dem Einlaufbereich (11) der Zufördereinrichtung (4) auf die Pufferfläche (3) eine Weiche (8) umfasst, die derart ausgebildet ist, dass der von der Zufördereinrichtung (4) zugeführte Stückgüterstrang derart ablenkt wird, dass eine bestimmte Anzahl aufeinanderfolgender Stückgüter in eine Sägezahnform gebracht werden kann, wobei die Sägezahnform eine Spitze und zwei unter flachem Winkel (α) zulaufende Abschnitte (9a, 9b) aufweist.

2. Puffervorrichtung nach Anspruch 1, **dadurch gekennzeichnet, dass** die Reihenschieber (7) von mehreren unabhängigen Antrieben (13) bewegt werden, insbesondere über Längsstatorantriebe, kuppelbare Transportketten, oder Einzelantriebe die in Zahnstangen eingreifen.

3. Puffervorrichtung nach Anspruch 1 oder 2, **dadurch gekennzeichnet, dass** in der Transportrichtung (T) von dem der Zufördereinrichtung (4) zugewandten Ende der Pufferfläche (3) zu einem der Abfördereinrichtung (6) zugewandten Ende der Pufferfläche (3) mehrere Reihenschieber (7) hintereinander die Stückgüter schieben können, wobei insbesondere mehr als 10, insbesondere mehr als 15 umlaufende Reihenschieber vorgesehen sind.

4. Puffervorrichtung nach mindestens einem der Ansprüche 1 bis 3, **dadurch gekennzeichnet, dass** ein Reihenschieber (7) eine Breite (b) aufweist, die im Wesentlichen der Breite der Pufferfläche (3) entspricht und die Reihenschieber (7) vorzugsweise beidseitig geführt werden.

5. Puffervorrichtung nach mindestens einem der Ansprüche 1 bis 4, **dadurch gekennzeichnet, dass** der Reihenschieber (7) mehrere in einer Richtung quer zur Transportrichtung (T) angeordnete Schiebermodule (7a,7b,7c) umfasst, die insbesondere unabhängig voneinander antreibbar sind.

6. Puffervorrichtung (1) nach mindestens einem der Ansprüche 1 bis 5, **dadurch gekennzeichnet, dass** die Abfördereinrichtung (5) mindestens zwei Abförderbänder umfasst (5a, 5b) und mindestens eine Zeile an Stückgüter von der Pufferfläche (3) auf ein erstes Abförderband (5a) geschoben werden kann und bei mehreren nebeneinander liegenden Zeilen der Artikelstrom über eine Verteileinrichtung auf die mindestens zwei Abförderbänder (5a, 5b) in zwei Stränge aufgeteilt werden kann, oder
die Abfördereinrichtung (5) zwei nebeneinanderliegende Abförderbänder umfasst (5a, 5b) und die Zeile an Stückgütern auf das eine oder andere Abförderband (5a, 5b) von dem Reihenschieber oder einem Reihenschiebermodul geschoben werden kann oder
die Stückgüter nach der Pufferfläche (3) von einen oder mehreren Abförderbändern weiter in der Transportrichtung (T) gefördert werden, und dabei insbesondere um 90° gedreht werden.

7. Verfahren zum Puffern von Stückgütern (2), insbesondere Behälter, Flaschen oder Gebinde, mit einer Puffervorrichtung (1) nach mindestens einem der Ansprüche 1 bis 6, wobei
die Stückgüter (2) über die Zufördereinrichtung (4) zu der Pufferfläche (3) gefördert werden, von den unabhängig voneinander angetriebenen, umlaufenden Reihenschiebern (7) in der Transportrichtung (T) durch die Pufferfläche (3) zu der Abfördereinrichtung (5) transportiert werden und
von der Abfördereinrichtung (5) abtransportiert werden,
**dadurch gekennzeichnet, dass**
die Reihenschieber (7) auf der Umlaufbahn (12) oberhalb der Pufferfläche (3) umlaufen,
vor dem Einlauf auf die Pufferfläche (3) eine bestimmte Anzahl an Stückgütern in eine Sägezahnform gebracht werden, wobei die Sägezahnform eine Spitze und zwei unter flachem Winkel (α) zulaufende Abschnitte (9a, 9b) aufweist,
beim Einlaufen der Stückgüter in den Einlaufbereich (11) der Zuführeinrichtung (4), die an die Pufferfläche (3) angrenzt, ein Reihenschieber (7) sich in der Transportrichtung (T) bewegt und zunächst an den vorauseilenden Abschnitt (9b) der sägezahnförmigen Stückgüter, der sich im Wesentlichen parallel zur Vorderfläche des Reihenschiebers (7) erstreckt, angreift und in die Transportrichtung (T) schiebt und sich weiter in die Transportrichtung bewegt, während sich die Stückgüter des nacheilenden Abschnitts (9a), der sich unter einem spitzen Winkel zur Vorderfläche des Reihenschiebers (7) erstreckt, nach und nach vor den Reihenschieber (7) bewegen, bis die Artikel vor dem Reihenschieber (7) liegen und auf die Pufferfläche (3) geschoben werden.

8. Verfahren nach Anspruch 7, **dadurch gekennzeichnet, dass** eine bestimmte Anzahl an Stückgütern über die Reihenschieber (7) zeilenweise auf die Pufferfläche (3) geschoben werden.

9. Verfahren nach Anspruch 7 oder 8, **dadurch gekennzeichnet, dass** die Reihenschieber (7) zumindest zeitweise mit unterschiedlicher Geschwindigkeit angetrieben werden, wobei vorzugsweise die Geschwindigkeit eines Reihenschiebers (7) bei Umlauf um seine Umlaufbahn (12) variiert.

10. Verfahren nach mindestens einem der Ansprüche 7 bis 9, **dadurch gekennzeichnet, dass** die Reihenschieber (7) beidseitig geführt werden.

11. Verfahren nach mindestens einem der Ansprüche 7 bis 10, **dadurch gekennzeichnet, dass** die Stückgüter der Pufferfläche (3) in einem Strang zugeleitet werden und eine Verteilereinrichtung die Stückgüter (2) in zwei oder mehr Stränge zum Abfördern zu zwei oder mehr nachfolgenden Maschinen (14, 15) teilt.

12. Verfahren nach mindestens einem der Ansprüche 7 bis 11, **dadurch gekennzeichnet, dass** in die Transportrichtung (T) mehrere, vorzugsweise zwei parallel angeordnete Zeilen von mehreren Reihenschiebern (7), vorzugsweise zwei, auf die Abfördereinrichtung (5) geschoben werden und anschließend über eine Verteilereinrichtung in mehrere, vorzugsweise zwei Stückgüterstränge geteilt werden oder
nur eine Zeile von einem Reihenschieber (7) auf die Abfördereinrichtung (5) geschoben wird und ein Stückgüterstrang abgeleitet wird.

## Claims

1. Buffer device (1) for piece goods (2), in particular, containers, bottles or packages, with
a buffer area (3),
a feed device (4) for supplying piece goods to the buffer area (3), the feed device (4) extending into an inlet region (11) which adjoins a rear end of the buffer area (3),
a discharge device (5), for discharging piece goods from the buffer area (3), the discharge device (5) being arranged at the opposite end of the buffer area,
several circulating, independently drivable row pushers (7) which can transport the piece goods (2) in the direction of transport (T) through the buffer area (3), where the orbit (12) of the row pushers (7) is arranged above the buffer area (3),
**characterised in that**
the feed device (4) and the discharge device (5) extend in a direction perpendicular to the direction of transport (T) and
the buffer device (1) comprises a switch (8) upstream of the inlet region (11) of the feed device (4) onto the buffer area (3), which is adapted such that it deflects the lane of piece goods supplied by the feed device (4) such that a certain number of successive piece goods can be made to assume a sawtooth shape, where the sawtooth shape has a tip and two sections (9a, 9b) that converge at a flat angle (α).

2. Buffer device according to claim 1, **characterised in that** the row pushers (7) are moved by several independent drives (13), in particular via longitudinal stator drives, detachable transport chains, or individual drives that engage with racks.

3. Buffer device according to claim 1 or 2, **characterised in that** that several successive row pushers (7) can push the piece goods in a direction of transport (T) from the end of the buffer area (3) facing the feed device (4) to an end of the buffer area (3) facing the discharge device (6), where, in particular, more than 10, in particular, more than 15 circulating row pushers are provided.

4. Buffer device according to at least one of the claims 1 to 3, **characterised in that** a row pusher (7) has a width (b) which corresponds substantially to the width of the buffer area (3) and the row pushers (7) are preferably guided on both sides.

5. Buffer device according to at least one of the claims 1 to 4, **characterised in that** the row pusher (7) comprises several pusher modules (7a, 7b, 7c) which are arranged in a direction transverse to the direction of transport (T), which are in particular drivable independently.

6. Buffer device (1) according to at least one of the claims 1 to 5, **characterised in that** the discharge device (5) comprises at least two discharge belts (5a, 5b) and at least one line of piece goods can be pushed from the buffer area (3) onto a first discharge belt (5a), and, in the case of several juxtaposed lines, the flow of articles can be split by way of a distribution device (10) onto the at least two discharge belts (5a, b) into two lanes , or
the discharge device (5) comprises two juxtaposed discharge belts (5a,5b) and the line of piece goods can be pushed onto the one or the other discharge belt (5a, 5b) by the row pusher or a row pusher module, or
the piece goods are transported further downstream of the buffer area (3) by one or more discharge belts in the direction of transport (T), and are in particular rotated by 90°.

7. Method for buffering piece goods (2), in particular containers, bottles or packages, with a buffer device (1) according to at least one of the claims 1 to 6, where
the piece goods (2) are transported via the feed device (4) to the buffer area (3) by the independently driven circulating row pushers (7) in the direction of transport (T) through the buffer area (3) to the discharge device (5) and
are transported away by the discharge device (5),
**characterised in that**
the row pushers (7) circulate in the orbit (12) above the buffer area (3),
upstream of the inlet onto the buffer area (3) a certain number of piece goods is brought in a sawtooth shape, where the sawtooth shape has a tip and two sections (9a, 9b) that converge at a flat angle (α),
when the piece goods enter the inlet area (11) of the feed device (4) adjoining the buffer area (3), a row pusher (7) moves in the direction of transport (T) and first engages with the leading section (9b) of the sawtooth-shaped piece goods, which extends substantially parallel to the front area of the row pusher (7) and pushes in the direction of transport (T) and moves further in the direction of transport, while the piece goods of the trailing section (9a) extending at an acute angle to the front area of the row pusher (7) gradually move in front of the row pusher (7) until the articles are located in front of the row pusher (7) and are pushed onto the buffer area (3).

8. Method according to claim 7, **characterised in that** a certain number of piece goods is pushed via the row pushers (7) line by line onto the buffer area (3).

9. Method according to claim 7 or 8, **characterised in that** the row pushers (7) are at least temporarily driven at different speeds, where preferably the speed of a row pusher (7) when circulating around its orbit (12) varies.

10. Method according to at least one of the claims 7 to 9, **characterised in that** the row pushers (7) are guided on both sides.

11. Method according to at least one of the claims 7 to 10, **characterised in that** the piece goods of the buffer area (3) are supplied in one lane and a distribution device splits the piece goods (2) in two or more lanes for discharging them to two or more downstream machines (14, 15).

12. Method according to at least one of the claims 7 to 11, **characterised in that** several, preferably two lines arranged in parallel in the direction of transport (T) are pushed by several row pushers (7), preferably two, onto the discharge device (5) and then split by a distribution device into several, preferably two, lanes of piece goods, or
only one line is pushed by a row pusher (7) onto the discharge device (5) and one lane of piece goods is discharged.

## Revendications

1. Dispositif de stockage tampon (1) pour des articles (2), en particulier des contenants, des bouteilles ou des récipients, avec une surface de stockage tampon (3),
un dispositif d'acheminement (4), pour acheminer des articles vers la surface de stockage tampon (3), qui s'étend jusqu'à une zone d'entrée (11), qui est adjacente à une extrémité arrière de la surface de stockage tampon (3), un dispositif d'évacuation (5) disposé à l'extrémité opposée de la surface de stockage tampon, pour évacuer des articles à partir de la surface de stockage tampon (3), plusieurs poussoirs en rangée (7) mobiles pouvant être entraînés indépendamment les uns des autres, qui peuvent transporter les articles (2) dans la direction de transport (T) à travers la surface de stockage tampon (3), une voie de circulation (12) des poussoirs en rangée (7) étant disposée au-dessus de la surface de stockage tampon (3),
**caractérisé en ce que**
le dispositif d'acheminement (4) et le dispositif d'évacuation (5) s'étendent dans une direction perpendiculaire à la direction de transport (T), et
le dispositif de stockage tampon (1) comprend, en amont de la zone d'entrée (11) du dispositif d'acheminement (4), sur la surface de stockage tampon (3), un aiguillage (8) qui est conçu de telle sorte que la file d'articles amenée par le dispositif d'acheminement (4) est déviée de telle sorte qu'un nombre déterminé d'articles consécutifs peut être amené dans une forme en dents de scie, la forme en dents de scie présentant une pointe et deux sections (9a, 9b) s'étendant sous un angle plat (α).

2. Dispositif de stockage tampon selon la revendication 1, **caractérisé en ce que** les poussoirs en rangée (7) sont déplacés par plusieurs entraînements indépendants (13), en particulier par l'intermédiaire d'entraînements à stator longitudinaux, de chaînes de transport pouvant être couplées ou d'entraînements individuels qui viennent en prise dans des crémaillères.

3. Dispositif de stockage tampon selon la revendication 1 ou 2, **caractérisé en ce que**, dans la direction de transport (T), plusieurs poussoirs en rangée (7) peuvent pousser les articles les uns derrière les autres depuis l'extrémité de la surface de stockage tampon (3) tournée vers le dispositif d'acheminement (4) jusqu'à une extrémité de la surface de stockage tampon (3) tournée vers le dispositif d'évacuation (6), en particulier plus de 10 poussoirs en rangée, en particulier plus de 15 poussoirs en rangée mobiles.

4. Dispositif de stockage tampon selon au moins l'une quelconque des revendications 1 à 3, **caractérisé en ce qu'**un poussoir en rangée (7) présente une largeur (b) qui correspond essentiellement à la largeur de la surface de stockage tampon (3) et les poussoirs en rangée (7) sont guidés de préférence des deux côtés.

5. Dispositif de stockage tampon selon au moins l'une quelconque des revendications 1 à 4, **caractérisé en ce que** les poussoirs en rangée (7) comprennent plusieurs modules de poussoir (7a, 7b, 7c) agencés dans une direction transversale à la direction de transport (T), qui peuvent être entraînés en particulier indépendamment les uns des autres.

6. Dispositif de stockage tampon (1) selon au moins l'une quelconque des revendications 1 à 5, **caractérisé en ce que** le dispositif d'évacuation (5) comprend au moins deux bandes d'évacuation (5a, 5b) et au moins une ligne d'articles peut être poussée depuis la surface de stockage tampon (3) sur une première bande d'évacuation (5a) et, dans le cas de plusieurs lignes côte à côte, le flux d'articles peut être divisé en deux brins par l'intermédiaire d'un dispositif de distribution sur les au moins deux bandes d'évacuation (5a, 5b), ou
le dispositif d'évacuation (5) comprend deux bandes d'évacuation côté à côté (5a, 5b) et la ligne d'articles peut être poussée sur l'une ou l'autre bande d'évacuation (5a, 5b) par le poussoir en rangée ou par un module de poussoir en rangée, ou
les articles sont transportés plus loin vers la surface de stockage tampon (3) par une ou plusieurs bandes d'évacuation dans la direction de transport (T) et sont tournées en particulier de 90°.

7. Procédé pour un stockage tampon d'articles (2), en particulier des contenants, des bouteilles ou des récipients, avec un dispositif de stockage tampon (1) selon au moins l'une quelconque des revendications 1 à 6, dans lequel
les articles (2) sont transportés vers la surface de stockage tampon (3) par l'intermédiaire du dispositif d'acheminement (4),
sont transportés dans la direction de transport (T) à travers la surface de stockage tampon (3) vers le dispositif d'évacuation (5) par les poussoirs en rangée (7) mobiles entraînés indépendamment les uns des autres, et
sont transportés à l'extérieur du dispositif d'évacuation (5),
**caractérisé en ce que**
les poussoirs en rangée (7) sont mobiles sur la voie de circulation (12) au-dessus de la surface de stockage tampon (3),
avant l'entrée sur la surface de stockage tampon (3), un nombre déterminé d'articles sont amenés dans une forme en dents de scie, la forme en dents de scie présentant une pointe et deux sections (9a, 9b) s'étendant sous un angle plat (α),
lors de l'entrée des articles dans la zone d'entrée (11) du dispositif d'acheminement (4), qui est adjacente à la surface de stockage tampon (3), un poussoir en rangée (7) se déplace dans la direction de transport (T) et vient en prise d'abord sur la section avant (9b) des articles en dents de scie, qui s'étend essentiellement parallèlement à la surface avant du poussoir en rangée (7), et se déplace dans la direction de transport (T) et se déplace plus loin dans la direction de transport, tandis que les articles de la section arrière (9a), qui s'étend sous un angle aigu par rapport à la surface avant du poussoir en rangée (7), se déplacent progressivement vers l'avant du poussoir de rangée (7) jusqu'à ce que les articles se trouvent devant le poussoir en rangée (7) et soient poussés sur la surface de stockage tampon (3).

8. Procédé selon la revendication 7, **caractérisé en ce qu'**un nombre déterminé d'articles sont poussés en ligne sur la surface de stockage tampon (3) par l'intermédiaire des poussoirs en rangée (7).

9. Procédé selon la revendication 7 ou 8, **caractérisé en ce que** les poussoirs en rangée (7) sont entraînés au moins temporairement à des vitesses différentes, la vitesse d'un poussoir en rangée (7) variant de préférence lors d'une circulation autour de sa voie de circulation (12).

10. Procédé selon au moins l'une quelconque des revendications 7 à 9, **caractérisé en ce que** les poussoirs en rangée (7) sont guidés des deux côtés.

11. Procédé selon au moins l'une quelconque des revendications 7 à 10, **caractérisé en ce que** les articles sont acheminés vers la surface de stockage tampon (3) en un seul brin et un dispositif de distribution divise les articles (2) en deux brins ou plus pour une évacuation vers deux machines (14, 15) suivantes ou plus.

12. Procédé selon au moins l'une quelconque des revendications 7 à 11, **caractérisé en ce que** dans la direction de transport (T), plusieurs, de préférence deux lignes agencées en parallèle de plusieurs poussoirs en rangée (7), de préférence deux, sont poussées sur le dispositif d'évacuation (5) et sont ensuite divisées en plusieurs, de préférence deux, lignes d'articles par l'intermédiaire d'un dispositif de distribution, ou une seule ligne est poussée sur le dispositif d'évacuation (5) par un poussoir en rangée (7) et un brin d'articles est dévié.
